Europäisches Patentamt

European Patent Office

Office européen des brevets

(19)

(11) **EP 1 393 299 B1**

(12) **EUROPEAN PATENT SPECIFICATION**

(45) Date of publication and mention
of the grant of the patent:
**18.10.2006 Bulletin 2006/42**

(51) Int Cl.:
**G10L 11/00** (2006.01)     **G11B 20/00** (2006.01)
**G10H 1/00** (2006.01)

(21) Application number: **02718143.7**

(22) Date of filing: **19.02.2002**

(86) International application number:
**PCT/EP2002/001719**

(87) International publication number:
**WO 2002/073593 (19.09.2002 Gazette 2002/38)**

(54) **A METHOD AND SYSTEM FOR THE AUTOMATIC DETECTION OF SIMILAR OR IDENTICAL SEGMENTS IN AUDIO RECORDINGS**

VERFAHREN UND SYSTEM ZUR AUTOMATISCHEN ERKENNUNG ÄHNLICHER ODER IDENTISCHER SEGMENTE IN AUDIOAUFZEICHNUNGEN

PROCEDE ET SYSTEME DE DETECTION AUTOMATIQUE DE SEGMENTS SIMILAIRES OU IDENTIQUES DANS DES ENREGISTREMENTS AUDIO

(84) Designated Contracting States:
**AT BE CH CY DE DK ES FI FR GB GR IE IT LI LU MC NL PT SE TR**

(30) Priority: **14.03.2001 EP 01106232**

(43) Date of publication of application:
**03.03.2004 Bulletin 2004/10**

(73) Proprietor: **International Business Machines Corporation**
**Armonk, NY 10504 (US)**

(72) Inventors:
• **FISCHER, Uwe**
**71088 Holzgerlingen (DE)**
• **HOFFMANN, Stefan**
**71093 Weil im Schönbuch (DE)**
• **KRIECHBAUM, Werner**
**72119 Ammerbuch-Breitenholz (DE)**
• **STENZEL, Gerhard**
**71083 Herrenberg (DE)**

(74) Representative: **Duscher, Reinhard**
**IBM Deutschland GmbH,**
**Intellectual Property,**
**Pascalstrasse 100**
**70548 Stuttgart (DE)**

(56) References cited:
**WO-A-01/04870          US-A- 5 210 820**
**US-A- 5 918 223**

• **PAUL D ET AL: "Filterbank implementation of a window based Gabor transform" 1996 CANADIAN CONFERENCE ON ELECTRICAL AND COMPUTER ENGINEERING. CONFERENCE PROCEEDINGS. THEME: GLIMPSE INTO THE 21ST CENTURY (CAT. NO.96TH8157) , vol. 2, 1996, pages 774-777, XP002200570 CALGARY, ALTA., CANADA, New York, NY, USA, IEEE, USA ISBN: 0-7803-3143-5**
• **DONG-GYU SIM ET AL: "Pyramidal robust Hausdorff distance for object matching" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA, IEEE, US, 24 October 1999 (1999-10-24), pages 88-92, XP010368634 ISBN: 0-7803-5467-2**
• **PFEIFFER S ET AL: "AUTOMATIC AUDIO CONTENT ANALYSIS" PROCEEDINGS OF ACM MULTIMEDIA 96. BOSTON, NOV. 18 - 22, 1996, NEW YORK, ACM, US, 18 November 1996 (1996-11-18), pages 21-30, XP000734706 ISBN: 0-89791-871-1**

EP 1 393 299 B1

**Description**

<u>Field of the Invention</u>

The invention generally relates to the field of digital audio processing and more specifically to a method and system for computerized identification of similar or identical segments in at least two different audio streams.

<u>Background of the Invention</u>

In recent years an ever increasing amount of audio data is recorded, processed, distributed, and archived on digital media using numerous encoding and compression formats like e.g. WAVE, AIFF, MPEG, RealAudio etc. Transcoding or resampling techniques that are used to switch from one encoding format to another almost never produce a recording that is identical to a direct recording in the target format. A similar effect occurs with most compression schemes where changes in the compression factor or other parameters result in a new encoding and a bit-stream that bears little similarity with the original bit-stream. Both effects make it rather difficult to establish the identity of one audio recording and another audio recording, i.e. identity of the two originally produced audio recordings, when the two recordings are stored in two different formats. Establishing possible identity of different audio recordings is therefore a pressing need in audio production, archiving and copyright protection.

During the production of a digital audio recording usually numerous different versions in various encoding formats come into existence during intermediate processing steps and are distributed over a variety of different computer systems. In most cases these recordings are neither cross-referenced nor tracked in a database and often it has to be established by listening to the recordings whether two versions are identical or not. An automatic procedure thus would greatly ease this task.

A similar problem exists in audio archives that have to deal with material that has been issued in a variety of compilations (like e.g. Jazz or popular songs) or on a variety of carriers (like e.g. the famous recordings of Toscanini with the NBC Symphony orchestra). Often the archive number of the original master of such a recording is not documented and in most cases it can only be decided by listening to the audio recordings whether a track from a compilation is identical to a recording of the same piece on another sound carrier.

In addition, copyright protection is a key issue for the audio industry and becomes even more relevant with the invention of new technology that makes creation and distribution of copies of audio recordings a simple task. While mechanisms to avoid unauthorized copies solve one side of the problem, it is also required to establish processes to detect unauthorized copies of unprotected legacy material. For instance, ripping a CD and distributing the contents of the individual tracks in compressed format to unauthorized consumers is the most common breach of copyright today, there are other copyright infringements that can not be detected by searching for identical audio recordings. One example is the assembly of a "new" piece by cutting segments from existing recordings and stitching them together. To uncover such reuse, a method must be able to detect not similar recordings but similar segments of recordings without knowing the segment boundaries in advance.

A further form of maybe unauthorized reuse is to quote a characteristic voice or phrase from an audio recording, either unchanged or e.g. transformed in frequency. Finding such transformed subsets is not only important for the detection of potential copyright infringements but also a valuable tool for the musicological analysis of historical and traditional material.

<u>Related Art</u>

Most of the popular techniques currently available to identify audio recordings rely on water-marking (for a recent review of state-of-the-art techniques refer to S. Katzenbeisser and F. Petitcolas eds., Information Hiding: Techniques for steganography and digital water-marking, Boston 2000): They attempt to modify the audio recording by inserting some inaudible information that is resistant against transcoding and therefore are not applicable to material already on the market. Furthermore many of today's audio productions are assembled from a multitude of recordings of individual tracks or voices, often produced at a higher temporal and frequency resolution than the final recording. Using water-marks to identify these intermediate data requires water-marks that do not produce an audible artifact through interference when the tracks are mixed for the final audio stream. Therefore it might be more desirable to identify such material by characteristic features and not by water-marks.

A non-invasive technique for the identification of identical audio recordings uses global features of the power spectrum as a signature for the audio recording. It is hereby referred to EP-A-1113432. Like all global frequency-based techniques this method can not distinguish between permutated recordings of the same material i.e. a scale played upwards leads to the same signature than the same scale played downwards. A further limitation of this and similar global methods is their sensitivity against local changes of the audio data like fade ins or fade outs.

US-A-5,918,223 discloses a method for content-based analysis, storage, retrieval, and segmentation of audio information that uses feature vectors generated from statistical measurements of the audio signal and its power spectrum.

WO01/04870 describes a method of automatic recognition of musical compositions and sound signals by extracting features in the frequency domain of the audio signal.

Paul D et al (Document XP-002200570) describes the use of Gabor transforms for joint time-frequency analysis. Dong-Gyu Sim et al. (Document XP 010368634) describe the application of the Haussdorff distance in signal matching algorithms.

Summary of the Invention

It is therefore an object of the present invention to provide a method and system for improved identification of identical or similar audio recordings or segments of audio recordings.

It is another object to provide such a method and system which allow for the detection of not similar recordings but similar segments of recordings without knowing the segment boundaries in advance.

It is another object to provide such a method and system which allow for an automated detection of identical copies of audio recordings or segments of audio recordings.

It is another object to allow a robust identification of audio material even in the presence of local modifications and distortions.

It is yet another object to enable to establish similarity or identity of one audio stream stored in two different formats, in particular two different compression formats.

The above objects are solved by the features of the independent claims. Advantageous embodiments are subject matter of the subclaims.

The concept underlying the invention is to provide an identification mechanism based on a time-frequency analysis of the audio material. The identification mechanism computes a characteristic signature from an audio recording and uses this signature to compute a distance between different audio recordings and therewith to select identical recordings. The invention allows the automated detection of identical copies of audio recordings. This technology can be used to establish automated processes to find potential unauthorized copies and therefore enables a better enforcement of copyrights in the audio industry.

It is emphasized that the proposed mechanism improves current art by using local features instead of global ones.

The invention particularly allows to detect identity or similarity of audio streams or segments thereof even if they are provided in different formats and/or stored on different physical carriers. It thereupon enables to determine whether an audio segment from a compilation is identical to a recording of the same audio piece just on another audio carrier.

Further the method according to the invention can be performed automatically and maybe even transparent for one or more users.

The proposed mechanism for the above reasons allows for an automated detection of identical copies of audio recordings. This technology can be used to establish automated processes to find potential unauthorized copies and therefore enables a better enforcement of copyrights in the audio industry.

Brief Description of the Drawings

In the following, the present invention is described in more detail by way of embodiments from which further features and advantages of the invention become evident, where

Fig. 1     is a schematic block diagram depicting computation of an audio signature according to the invention wherein boxes 20 and 50 represent optional components;

Fig. 2     is a flow diagram illustrating the steps of pre-processing of a master recording according to the invention;

Fig. 3     is a typical power spectrum of a recording of the Praeludium XIV of J.S. Bach's Wohltemperiertes Klavier where a confusion set for the maximal power contains one element, whereas a confusion set for the second strongest peak contains two elements;

Fig. 4     is a segment of a Gabor Energy Density Slice for a frequency of 497 Hz and a scale 1000 computed for the music piece depicted in Fig. 3;

Fig. 5     is a flow diagram illustrating the steps for quantization of a time-frequency energy density slice according to the invention;

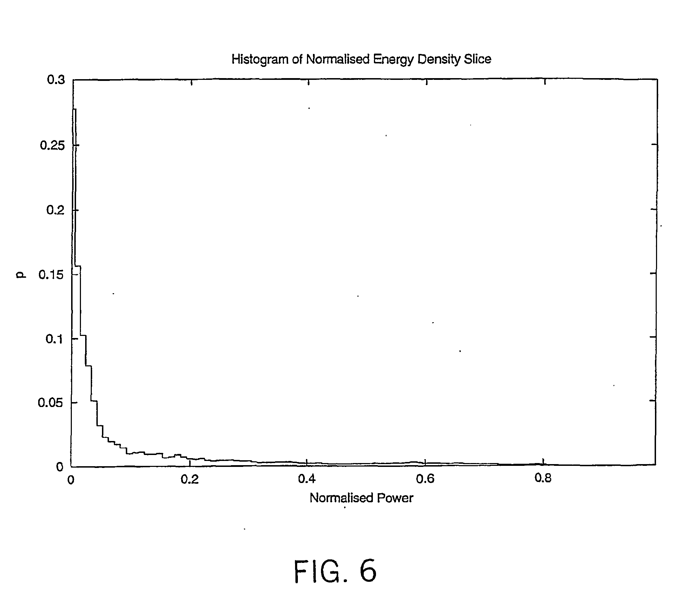

Fig. 6     is a histogram plot of the Gabor Energy Density Slice for the segment with frequency 497 Hz and scale 1000 shown in Fig. 4;

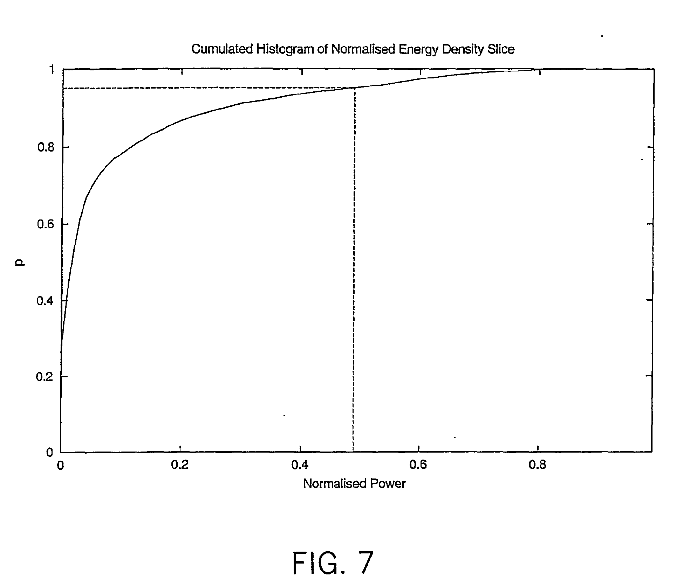

Fig. 7     is a cumulated histogram plot of the Gabor Energy Density Slice for the segment with frequency 497 Hz and scale 1000 shown in Fig. 4;

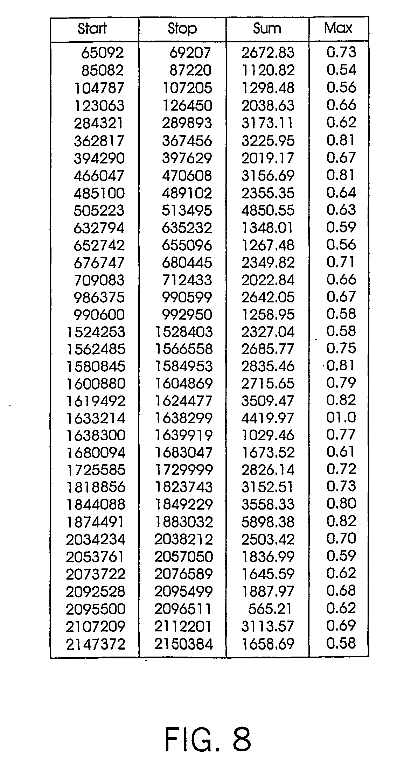

Fig. 8     raw data of a 497 Hz signature computed for the example of Fig. 4, with unmerged runs for the sample master where start and end are presented in sample units;

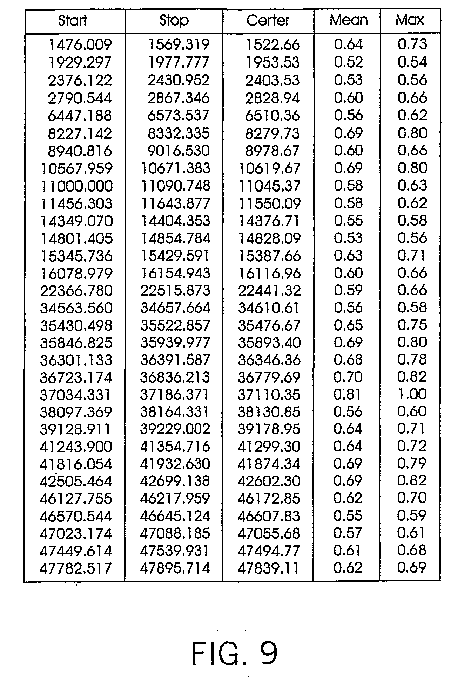

Fig. 9     are merged data derived from Fig. 8 for the 497 Hz signature, but for a sample master;

Fig. 10    is a flow diagram illustrating computation of the distance between two audio signatures according to the invention;

Fig. 11    is another flow diagram illustrating computation of a Hausdorff distance, in accordance with the invention;

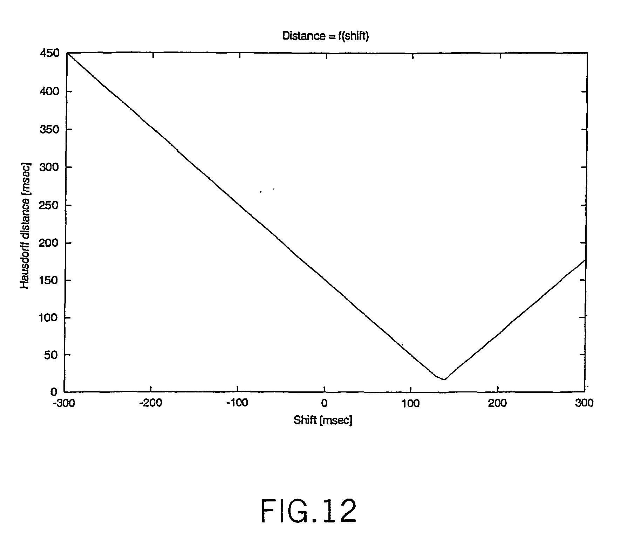

Fig. 12    is a plot of Hausdorff distance between the 497 Hz Signature of the WAVE master and an MPEG3 compressed version with 8kbit/sec of the same recording, as a function of the shift between the master and the test signature;

Fig. 13    shows a set of ellipses as a typical result of a slicing operation in accordance with the invention;

Fig. 14    shows exemplary templates used for finding those segments in candidate recordings point patterns that are similar or identical to those in the template; and

Fig. 15    shows another set of ellipses for which a template like the one shown in Fig. 14 will match the two segments with the filled ellipses depicted herein.

## Detailed Description of the Embodiments

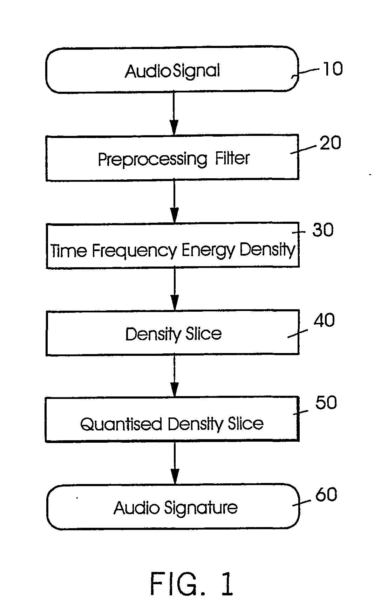

Referring to Fig. 1, prior to the computation of the audio signature 60, analog material has to be digitized by appropriate means.

The audio signature described hereinafter is computed from an audio recording 10 by applying the following steps to the digital audio signal:

### Preprocessing Filter

Depending on the type of material and the type of similarity desired, the audio data may be preprocessed 20 by an optional filter. Examples for such filters are the removal of tape noise form analogue recordings, psychophysical filters to model the processing by the ear and the auditory cortex of a human observer, or a foreground/ background separation to single out solo instruments. Those skilled in the art will not fail to realize that some of the possible pre-processing filters are better implemented operating on the time-frequency density than operating on the digital audio signal.

### Time Frequency Energy Density

Estimate 30 the time frequency energy density of the audio recording. The time frequency energy density $\rho_x(t,v)$ of a signal x is defined by

$$E_x = \int_{-\infty}^{+\infty}\int_{-\infty}^{+\infty} \rho_x(t,v)\,dt\,dv$$

i.e. by the feature that the integral of the density over time t and frequency $v$ equals the energy content of the signal. A variety of methods exist to estimate the time energy density, the most widely known are the power spectrum as derived from a windowed Fourier Transform, and the Wigner-Ville distribution.

### Density Slice

One or more density slices are determined 40 by computing the intersection of the energy density with a plane. Whereas any orientation of the density plane with respect to the time, frequency, and energy axes of the energy density generates a valid density slice and may be used to determine a signature, some orientations are preferred and not all orientations yield information useful for the identification of a recording: Any cutting plane that is orthogonal to the time axis contains only the energy density of the recording at a specific time instance. Since the equivalent time in a recording that has been edited by cutting out a piece of the recording is hard to determine, such slices are usually not well-suited to detect the identity of two recordings. A cutting plane perpendicular to the energy axis generates an approximation of the time-frequency evolution of the recording and a cutting plane perpendicular to the frequency axis traces the evolution of a specific frequency over time. For many approximations of the time frequency energy density, density slices orthogonal to the frequency axis can be computed without determining the complete energy density. Both, the orientation perpendicular to the energy axis and the orientation perpendicular to the frequency axis capture enough information to allow the identification of identical recordings. The actual choice of the orientation depends on the computational costs one is willing to pay for an identification and the desired distortion resistance of the signature.

### Quantized Density Slice

The density slice is transformed by applying an appropriate quantization 50. The actual choice of the quantization algorithm depends on the orientation of the slice and the desired accuracy of the signature. Examples for quantization techniques will be given in the detailed description of the embodiments. It should be noted, that the identity transformation of a slice leads to a valid quantization and therefore this step is optional.

Two signatures can be compared by measuring the distance between their optimal alignment. In general, the choice of the metric used depends on the orientation of the quantized density slices with respect to the time, frequency, and energy axis of the energy density. Examples for such distance measures are given in the description of the two methods. A decision rule with a separation value depending on the metric is used to distinguish identical from non-identical recordings.

In the following, two different methods will be described in more detail.

## 1. First Method

The first method which does not form part of the invention, describes the special case of density slices orthogonal to the frequency axis of the energy density distribution and a metric chosen to identify identical recordings. The energy density distribution is derived from the Gabor transform (also known as short time Fourier transform with a Gaussian window) of the signal. The method compares an audio recording with known identity, called "master recording" in the following description, against a set of other audio recordings called "candidate recordings". It identifies all candidates that are subsequences of the original generated by applying fades or cuts to beginning or end of the recording but otherwise assumes that the candidates have not been subjected to transformations like e.g. frequency shifting or time warping.

### 1.1. Preprocessing of the Master

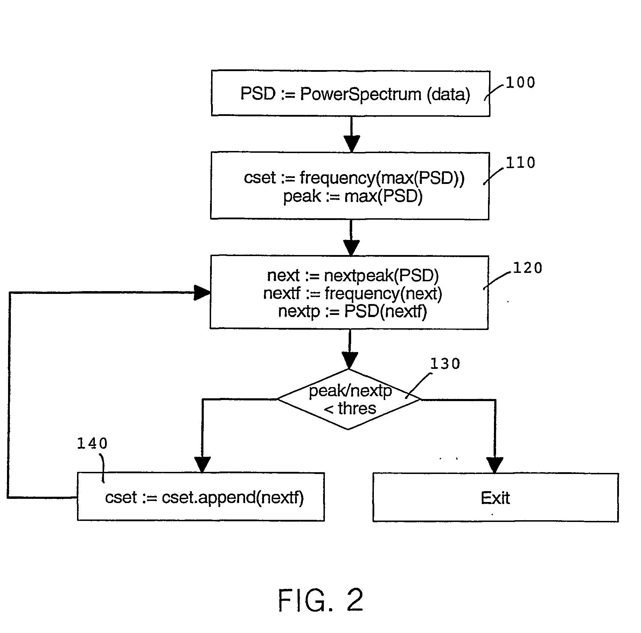

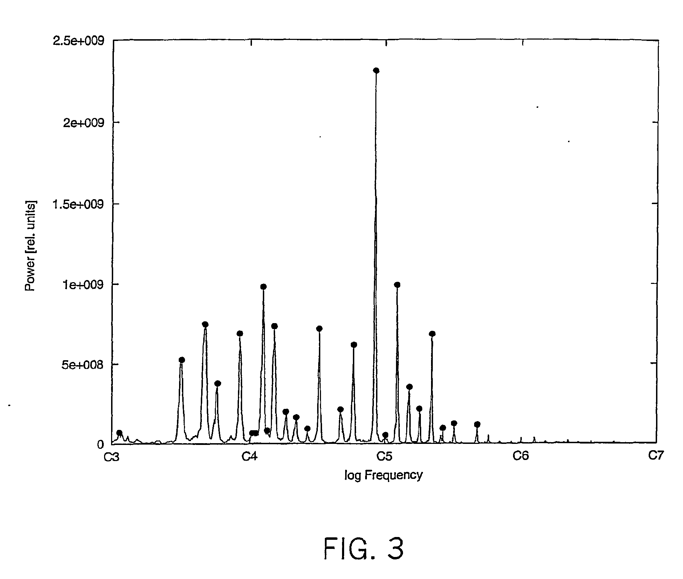

The master recording is preprocessed to select the slicing planes for the energy density distribution as described in the flowchart depicted in Fig. 2. The power spectrum (Fig. 3) of the signal is computed 100, the frequency corresponding to the maximum of the power spectrum is selected 110, and the confusion set of the maximum is initialized with this frequency. The energy of the next prominent maxima 120 of the power spectrum is compared 130 with the energy of the maximum and the frequencies of these maxima are added 140 to the confusion set until the ratio between the maximum of the power spectrum and the energy at the location of a secondary peaks drops below a threshold 'thres'. The rational behind the confusion set is that for peaks with almost identical energy values, the ordering of the peaks, and therefore the frequency of the maximum of the power spectrum is likely to be distorted by different encoding or compression algorithms. The value of thresh used by the first method is 1.02. As can be seen from Fig. 3 the confusion set of the master recording used as an example in the description of the first method consists of only the frequency 497 Hz. As slicing plane (s) for the energy densities, the elements from the confusion set are used, and the values computed during preprocessing are either stored or forwarded to module computing the time-frequency energy density.

### 1.2. Computation of the Time-Frequency Energy Density

For the master recording and all candidates the time-frequency densities for all elements of the confusion set of the spectral maximum are computed. In the first method a time-frequency density S based on the Gabor transform,

$$S_x(t, v; h) = \left| \int_{-\infty}^{+\infty} x(u) h^*(u - t) e^{-2j\pi v u} du \right|^2$$

i.e. a short-time Fourier transform with the Gaussian window

$$h(z) = e^{-z/2\sigma^2}$$

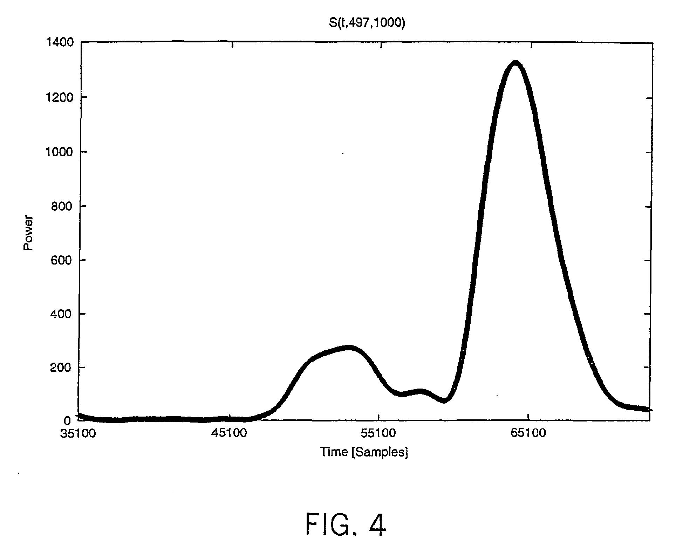

is used. Since the Gabor transform can be computed for individual frequencies, no explicit slicing operation is necessary and only the energy densities for the frequencies from the confusion set are computed. A segment of the time frequency energy density of the left channel of the example master recording for the frequency of 497 Hz and a scale parameter of 1000 is shown in Fig. 4. The slices of the time-frequency energy density are stored or forwarded to the quantization module.

### 1.3. Quantization of the Time-Frequency Slice

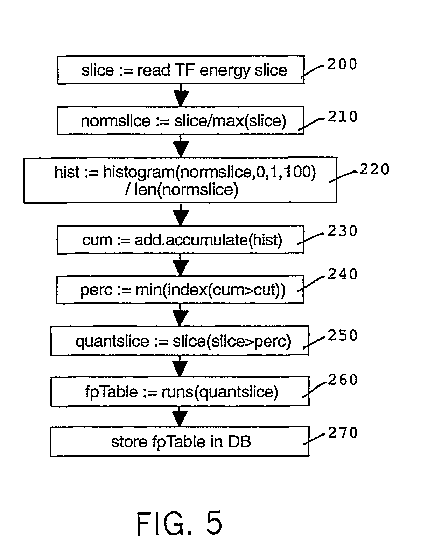

A time-frequency (TF) energy density slice is quantized as described in the flow chart depicted in Fig. 5. Having read 200 a TF energy slice, the power values are normalized 210 to 1 by dividing them with the maximum of the slice. From the normalized slice a histogram is computed 220 and the histogram is cumulated 230. The bin-width for the histogram used in the first method is 0.01. From the cumulated histogram a cut value is selected by determining 240 the minimal index 'perc' for which the value of the cumulated histogram is greater than a constant cut. The constant cut used in the first method is 0.95. In the normalized slice, all power values greater perc * histogram bin-width are selected 250 and for all runs of such values, the start time, the end time, the sum of the power values and the maximal power of the run is determined 260. Runs that are separated by less than gap sample points are merged, and for the merged runs the start time, the end time, the center time, the mean power and the maximal power are computed. The set of these data constitutes the signature of an audio recording for the frequency of the slicing plane and is stored 270 in a database.

### 1.4. Comparison of quantized time-frequency slices

The first embodiment uses the Hausdorff distance to compare two signatures. For two finite point sets A and B the Hausdorff distance is defined as

$$H(A, B) = \max(h(A, B), h(B, A))$$

with

$$h(A,B) = \max_{a \in A} \min_{b \in B} \|a - b\|$$

The norm used in the first method is the L1 norm.

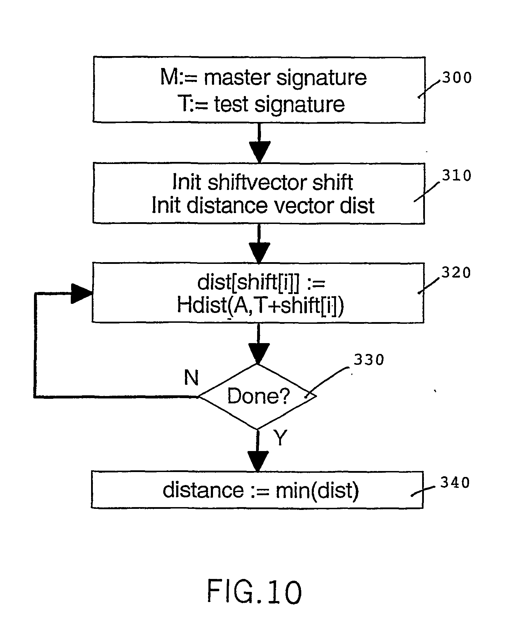

To establish the similarity between a master signature and a test signature, the first method computes the Hausdorff distances between the master signature and a set of time-shifted copies of the test signature, therewith determining the distance of the best alignment between master and test signature. Those skilled in the art will not fail to realize that the flowchart depicted in Fig. 10 for this procedure describes the principle of operation only and that numerous methods have been proposed for implementations needing less operations to compute the alignment between a point set and a translated point-set (see for example D. Huttenlocher et al., Comparing images using the Hausdorff distance, IEEE PAMI, 15, 850-863, 1993). The distance measure used is based on the assumption that the master and the test recording are identical except for minor fade ins and fade outs, to detect more severe editing different metrics and/or different shift vectors have to be used.

Now referring to Fig. 10, in a first step 300 the comparison module reads the signatures for the master and the test recording. A vector of shifts is computed 310, the range of shifts checked by the first method is [-2*d, 2*d], where d is the Hausdorff distance between the master and the unshifted test recording. The shift vector is the linear space for this interval with a step-width of 10 msec. For each shift, the Hausdorff distance between master signature and the shifted test signature is computed 320 and stored 340 in the distance vector 'dist'. The distance between master and template is the minimum of 'dist', i.e. the distance of the optimal alignment between master and test signature.

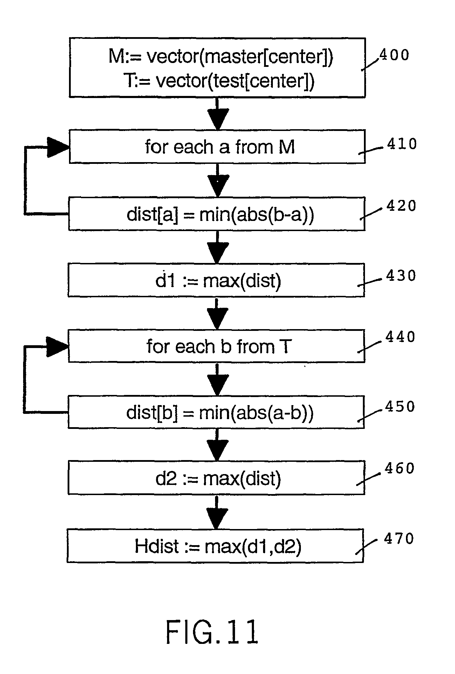

A flow for the computation of the Hausdorff distance is shown in Fig. 11. From both the master signature and the test signature the "center" value is selected and stored in a vector 400. For all elements 410 from the master vector M, the

distance to all elements from the test vector T is computed and stored in a distance vector 420. The maximal element of this distance vector is set 430 the distance 'd1'. In the next step for all elements 440 from the test vector T, the distance to all elements from the master vector M is computed and stored in a distance vector 450. The maximal element of this distance vector is set 460 the distance 'd2'. The Hausdorff distance between the master signature and the test signature is set 470 the maximum of d1 and d2.

The decision whether master and template recording are equal is based on a threshold for the Hausdorff distance. Whenever the distance between master and test is less or equal than the threshold both recordings are considered to be equal, otherwise they are judged to be different. The threshold used in the first method is 500.

## 2. Second Method

The second method, an embodiment of the invention, describes the application of this invention in the special case of density slices orthogonal to the power axis of the energy density distribution. The embodiment compares one or more audio recordings ("candidate recording") with a template ("master recording") that contains the motif or phrase to be detected. Typically the template will be a time-interval of a recording processed by similar means than described in this embodiment.

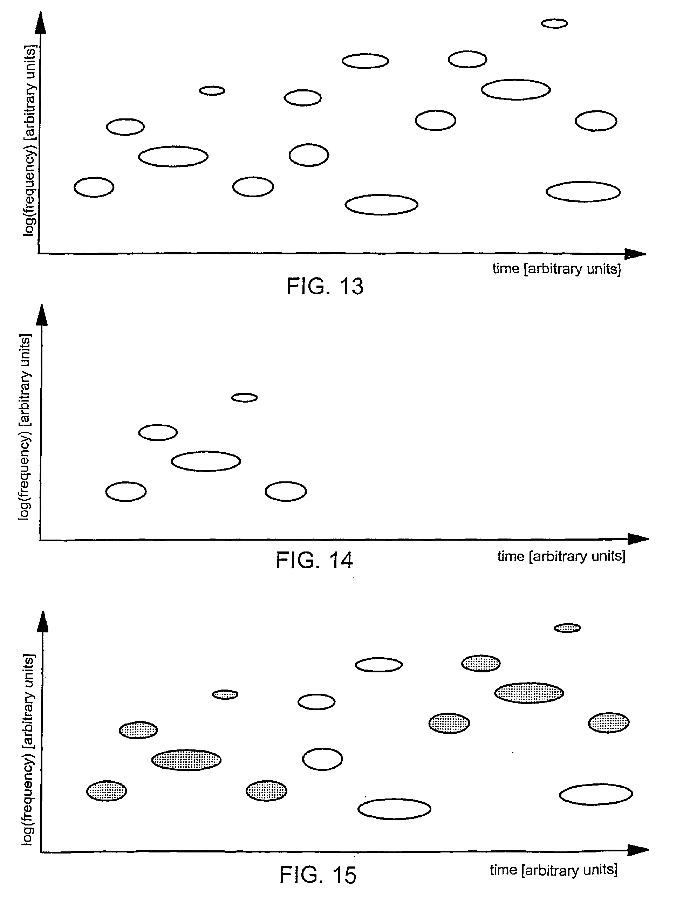

Like in the first method the time-frequency transformation used is the Gabor transform. The time-frequency density of a "candidate recording" is computed using logarithmically spaced frequencies from an appropriate interval, e.g. the frequency range of a piano. This logarithmic scale may be translated in such a way, that the frequency of the maximum of the energy density corresponds to a value of the scale. The time-frequency energy density such computed is sliced with a plane orthogonal to the energy axis. The result of such a slicing operation is a set of ellipses as the ones illustrated in Fig. 13. These ellipses are characterized by a triplet that consists of the time and frequency coordinate of the intersection of the ellipses major axis and the maximal or integral energy of the density enclosed by the ellipse. Standard techniques like those described in the first embodiment can than be used to find those segments in the candidate recordings point patterns that are similar or identical to those in the template. A template like the one shown in Fig. 14 will match the two segments with filled ellipses in Fig. 15. The third coordinate of the triple can be used as a weighting factor to increase the specificity of the alignment, i.e. by rejecting matches where the confusion sets of the energies of aligned ellipses are different.

It should be noted that ridges (R.Carmona et al, Practical Time-Frequency Analysis, Academic Press New York 1998) can be used as an alternative to ellipses resulting from slicing.

## Claims

1. A computerized method to determine identity or similarity between a first audio segment of a first audio stream and at least a second audio segment of an at least second audio stream, comprising the steps of:

   digitizing at least the first audio segment and the at least second audio segment of said audio streams;

calculating the time-frequency energy density of the first audio segment and the at least second audio segment;

calculating for the first audio segment and the at least second audio segment a characteristic signature in the form of at least one time-frequency energy density slice by intersecting the time-frequency energy density with a plane;

aligning the at least two characteristic signatures;

comparing the at least two aligned characteristic signatures and calculating a distance between the aligned characteristic signatures; and

determining identity or similarity between the at least two audio segments based on the determined distance.

2. Method according to claim 1, wherein the time-frequency energy density slice is calculated by intersecting the time-frequency energy density with a plane perpendicular to the time axis or to the frequency axis or to the energy axis.

3. Method according to any of claims 1 or 2, wherein the time-frequency energy density slice is quantized.

4. Method according to any of the preceding claims, wherein the time-frequency energy density is based on a Gabor transform which is computed for individual frequencies.

5. Method according to any of the preceding claims, wherein the Haussdorff distance is calculated to compare the at least two characteristic signatures.

6. Method according to claim 5, wherein a threshold is used for the Haussdorff distance.

7. Method according to any of the preceding claims, providing a decision rule with a separation value for determining identity or similarity.

8. A system for determining identity or similarity between a first audio segment of a first audio stream and at least a second audio segment of an at least second audio stream, comprising:

means for digitizing at least the first audio segment and the at least second audio segment of said audio streams;

means for computing a time-frequency energy density of the first audio segment and the at least second audio segment; first processing means for calculating for the first audio segment and the at least second audio segment a characteristic signature in the form of at least one time-frequency energy density slice by intersecting the time-frequency energy density with a plane;

second processing means for aligning the at least two characteristic signatures;

third processing means for comparing the at least, two aligned characteristic signatures and calculating a distance between the aligned characteristic signatures; and

fourth processing means for determining identity or similarity between the at least two audio segments based on the determined distance.

9. System according to claim 8, further comprising means for calculating the time-frequency energy density slice by intersecting the time-frequency energy density with a plane perpendicular to the time axis or to the frequency axis or to the energy axis.

10. System according to claim 8 or 9, further comprising processing means for quantizing the time-frequency energy density slice.

11. System according to any of the claims 8 to 10, further comprising means for computing a Gabor transform for individual frequencies.

12. System according to any of the claims 8 to 11, further comprising processing means for calculating the Haussdorff distance to compare the at least two characteristic signatures.

13. System according to any of the claims 8 to 12, comprising processing means for applying a decision rule with a separation value for determining identity or similarity.

## Patentansprüche

1. Computerunterstütztes Verfahren zur Feststellung von Gleichheit oder Ähnlichkeit zwischen einem ersten Tonsegment eines ersten Audiostroms und mindestens einem zweiten Tonsegment eines mindestens zweiten Audiostroms, wobei das Verfahren die folgenden Schritte umfasst:

Digitalisieren des mindestens ersten Tonsegments und des mindestens zweiten Tonsegments der Audioströme;

Berechnen der Zeit-Frequenz-Energiedichte des ersten Tonsegments und des mindestens zweiten Tonsegments;

Berechnen einer charakteristischen Signatur in Form von mindestens eines Zeit-Frequenz-Energiedichtesektors für das erste Tonsegment und das mindestens zweite Tonsegment, indem die Zeit-Frequenz-Energiedichte mit einer Ebene geschnitten wird;

Ausrichten der mindestens zwei charakteristischen Signaturen;

Vergleichen der mindestens zwei ausgerichteten charakteristischen Signaturen und Berechnen eines Abstands zwischen den ausgerichteten charakteristischen Signaturen; und Feststellen von Gleichheit oder Ähnlichkeit zwischen den mindestens zwei Tonsegmenten auf der Grundlage des ermittelten Abstands.

2. Verfahren nach Anspruch 1, wobei der Zeit-Frequenz-Energiedichtesektor berechnet wird, indem die Zeit-Frequenz-Energiedichte mit einer Ebene geschnitten wird, die senkrecht zur Zeitachse oder zur Frequenzachse oder zur Energieachse ist.

3. Verfahren nach einem der Ansprüche 1 oder 2, wobei der Zeit-Frequenz-Energiedichtesektor quantisiert wird.

4. Verfahren nach einem der vorhergehenden Ansprüche, wobei die Zeit-Frequenz-Energiedichte auf einer Gabor-Transformation beruht, die für einzelne Frequenzen berechnet wird.

5. Verfahren nach einem der vorhergehenden Ansprüche, wobei der Hausdorff-Abstand berechnet wird, um die mindestens zwei charakteristischen Signaturen zu vergleichen.

6. Verfahren nach Anspruch 5, wobei ein Schwellenwert für den Hausdorff-Abstand verwendet wird.

7. Verfahren nach einem der vorhergehenden Ansprüche, wobei eine Entscheidungsregel mit einem Trennungswert zur Feststellung von Gleichheit oder Ähnlichkeit verwendet wird.

8. System zur Feststellung von Gleichheit oder Ähnlichkeit zwischen einem ersten Tonsegment eines ersten Audiostroms und mindestens einem zweiten Tonsegment eines mindestens zweiten Audiostroms, wobei das System Folgendes umfasst:

ein Mittel zum Digitalisieren des mindestens ersten Tonsegments und des mindestens zweiten Tonsegments der Audioströme;
ein Mittel zum Berechnen der Zeit-Frequenz-Energiedichte des ersten Tonsegments und des mindestens zweiten Tonsegments;
ein erstes Verarbeitungsmittel zum Berechnen einer charakteristischen Signatur in Form von mindestens eines Zeit-Frequenz-Energiedichtesektors für das erste Tonsegment und das mindestens zweite Tonsegment, indem die Zeit-Frequenz-Energiedichte mit einer Ebene geschnitten wird;
ein zweites Verarbeitungsmittel zum Ausrichten der mindestens zwei charakteristischen Signaturen;

ein drittes Verarbeitungsmittel zum Vergleichen der mindestens zwei ausgerichteten charakteristischen Signaturen und zum Berechnen eines Abstands zwischen den ausgerichteten charakteristischen Signaturen; und
ein viertes Verarbeitungsmittel zum Feststellen von Gleichheit oder Ähnlichkeit zwischen den mindestens zwei Tonsegmenten auf der Grundlage des ermittelten Abstands.

9. System nach Anspruch 8, das außerdem ein Mittel zum Berechnen des Zeit-Frequenz-Energiedichtesektors umfasst, indem die Zeit-Frequenz-Energiedichte mit einer Ebene geschnitten wird, die senkrecht zur Zeitachse oder zur Frequenzachse oder zur Energieachse ist.

10. System nach Anspruch 8 oder 9, das außerdem ein Verarbeitungsmittel zur Quantisierung des Zeit-Frequenz-Energiedichtesektors umfasst.

11. System nach einem der Ansprüche 8 bis 10, das außerdem ein Mittel zum Berechnen einer Gabor-Transformation für einzelne Frequenzen umfasst.

12. System nach einem der Ansprüche 8 bis 11, das außerdem ein Verarbeitungsmittel zum Berechnen des Hausdorff-Abstands zum Vergleichen der mindestens zwei charakteristischen Signaturen umfasst.

13. System nach einem der Ansprüche 8 bis 12, das ein Verarbeitungsmittel zum Anwenden einer Entscheidungsregel mit einem Trennungswert zum Feststellen von Gleichheit oder Ähnlichkeit umfasst.

## Revendications

1. Un procédé informatisé, pour déterminer l'identité ou la similarité entre un premier segment audio d'un premier flux audio et au moins un deuxième segment audio d'un au moins un deuxième flux audio, comprenant les étapes consistant à :

à numériser au moins le premier segment audio et le au moins deuxième segment audio des dits flux audio ;
calculer la densité d'énergie en fréquence temporelle du premier segment audio et du au moins un deuxième segment audio ;
calculer, pour le premier segment audio et le au moins un deuxième segment audio, une signature caractéristique ayant la forme d'au moins une tranche de densités d'énergie en fréquence temporelle, par intersection de la densité d'énergie en fréquence temporelle avec un plan ;
aligner les au moins deux signatures caractéristiques ;

comparer les au moins deux signatures caractéristiques et calculer une distance entre les signatures caractéristiques alignées ; et

déterminer l'identité ou la similarité entre les au moins segments audio, d'après la distance déterminée.

2. Procédé selon la revendication 1, dans lequel la tranche de densités d'énergie en fréquence temporelle est calculée par intersection de la densité d'énergie en fréquence temporelle avec un plan perpendiculaire à l'axe des temps, ou l'axe des fréquences, ou l'axe des énergies.

3. Procédé selon l'une quelconque des revendications 1 ou 2, dans lequel la tranche de densités d'énergie en fréquence temporelle est quantifiée.

4. Procédé selon l'une quelconque des revendications précédentes, dans lequel la densité d'énergie en fréquence temporelle est basée sur une transformation de Gabor, calculée pour des transformations individuelles.

5. Procédé selon l'une quelconque des revendications précédentes, dans lequel la distance de Haussdorff est calculée, pour comparer les au moins deux signatures caractéristiques.

6. Procédé selon la revendication 5, dans lequel un seuil est utilisé pour la distance de Haussdorff.

7. Procédé selon l'une quelconque des revendications précédentes, fournissant une règle de décision, avec une valeur de séparation, pour déterminer l'identité ou la similarité.

8. Un système de détermination de l'identité ou de la similarité entre un premier segment audio d'un premier flux audio et au moins un deuxième segment audio d'un au moins un deuxième flux audio, comprenant :

des moyens, pour numériser au moins le premier segment audio et le au moins un deuxième segment audio desdits flux audio ;

des moyens, pour calculer une densité d'énergie en fréquence temporelle du premier segment audio et du au moins un deuxième un segment audio ;

des premiers moyens de traitement, pour calculer, pour le premier segment audio et le au moins un deuxième segment audio, une signature caractéristique, ayant la forme d'au moins une tranche de densités d'énergie en fréquence temporelle, par intersection de la densité d'énergie en fréquence temporelle avec un plan ;

des deuxièmes moyens de traitement, pour aligner les au moins deux signatures caractéristiques ;

des troisièmes moyens de traitement, pour comparer les au moins deux signatures caractéristiques alignées et calculer une distance entre les signatures caractéristiques alignées ; et

des quatrièmes moyens de traitement, pour déterminer l'identité ou la similarité entre les au moins deux segments audio, d'après la distance déterminée.

9. Système selon la revendication 8, comprenant en outre des moyens pour calculer la tranche de densités d'énergie en fréquence temporelle, par intersection de la densité d'énergie en fréquence temporelle avec un plan perpendiculaire à l'axe des temps, ou à l'axe des fréquences, ou à l'axe des énergies.

10. Système selon la revendication 8 ou 9, comprenant en outre des moyens de traitement pour quantifier la tranche de densités d'énergie en fréquence temporelle.

11. Système selon l'une quelconque des revendications 8 à 10, comprenant en outre des moyens, pour calculer une transformation de Gabor pour des fréquences individuelles.

12. Système selon l'une quelconque des revendications 8 à 11, comprenant en outre des moyens de traitement, pour calculer la distance de Haussdorff pour comparer les au moins deux signatures caractéristiques.

13. Système selon l'une quelconque des revendications 8 à 12, comprenant des moyens de traitement, pour appliquer une règle de décision avec une valeur de séparation, pour déterminer une identité ou une similarité.

AudioSignal ─── 10

↓

Preprocessing Filter ── 20

↓

Time Frequency Energy Density ── 30

↓

Density Slice ── 40

↓

Quantised Density Slice ── 50

↓

Audio Signature ── 60

# FIG. 1

```
┌─────────────────────────────────┐
│  PSD := PowerSpectrum (data)    │  ⟋100
└─────────────────────────────────┘
                 │
                 ▼
┌─────────────────────────────────┐
│  cset := frequency(max(PSD))    │  ⟋110
│       peak := max(PSD)          │
└─────────────────────────────────┘
                 │
                 ▼
┌─────────────────────────────────┐
│     next := nextpeak(PSD)       │  ⟋120
│    nextf := frequency(next)     │
│      nextp := PSD(nextf)        │
└─────────────────────────────────┘
                 │
                 ▼
             ╱─────────╲
            ╱ peak/nextp ╲      130
            ╲  < thres   ╱
             ╲─────────╱
         ┌──────┴──────────┐
         ▼                 ▼
┌──────────────────────┐  ┌──────────────────────┐
│ cset := cset.append  │  │        Exit          │
│       (nextf)        │  │                      │
└──────────────────────┘  └──────────────────────┘
      140
```

FIG. 2

11

FIG. 3

S(t,497,1000)

FIG. 4

slice := read TF energy slice ⎤ ⁻200

↓

normslice := slice/max(slice) ⎤ ⁻210

↓

hist := histogram(normslice,0,1,100) ⎤ ⁻220
/ len(normslice)

↓

cum := add.accumulate(hist) ⎤ ⁻230

↓

perc := min(index(cum>cut)) ⎤ ⁻240

↓

quantslice := slice(slice>perc) ⎤ ⁻250

↓

fpTable := runs(quantslice) ⎤ ⁻260

↓

store fpTable in DB ⎤ ⁻270

# FIG. 5

Histogram of Normalised Energy Density Slice

FIG. 6

Cumulated Histogram of Normalised Energy Density Slice

FIG. 7

| Start | Stop | Sum | Max |
|---|---|---|---|
| 65092 | 69207 | 2672.83 | 0.73 |
| 85082 | 87220 | 1120.82 | 0.54 |
| 104787 | 107205 | 1298.48 | 0.56 |
| 123063 | 126450 | 2038.63 | 0.66 |
| 284321 | 289893 | 3173.11 | 0.62 |
| 362817 | 367456 | 3225.95 | 0.81 |
| 394290 | 397629 | 2019.17 | 0.67 |
| 466047 | 470608 | 3156.69 | 0.81 |
| 485100 | 489102 | 2355.35 | 0.64 |
| 505223 | 513495 | 4850.55 | 0.63 |
| 632794 | 635232 | 1348.01 | 0.59 |
| 652742 | 655096 | 1267.48 | 0.56 |
| 676747 | 680445 | 2349.82 | 0.71 |
| 709083 | 712433 | 2022.84 | 0.66 |
| 986375 | 990599 | 2642.05 | 0.67 |
| 990600 | 992950 | 1258.95 | 0.58 |
| 1524253 | 1528403 | 2327.04 | 0.58 |
| 1562485 | 1566558 | 2685.77 | 0.75 |
| 1580845 | 1584953 | 2835.46 | 0.81 |
| 1600880 | 1604869 | 2715.65 | 0.79 |
| 1619492 | 1624477 | 3509.47 | 0.82 |
| 1633214 | 1638299 | 4419.97 | 01.0 |
| 1638300 | 1639919 | 1029.46 | 0.77 |
| 1680094 | 1683047 | 1673.52 | 0.61 |
| 1725585 | 1729999 | 2826.14 | 0.72 |
| 1818856 | 1823743 | 3152.51 | 0.73 |
| 1844088 | 1849229 | 3558.33 | 0.80 |
| 1874491 | 1883032 | 5898.38 | 0.82 |
| 2034234 | 2038212 | 2503.42 | 0.70 |
| 2053761 | 2057050 | 1836.99 | 0.59 |
| 2073722 | 2076589 | 1645.59 | 0.62 |
| 2092528 | 2095499 | 1887.97 | 0.68 |
| 2095500 | 2096511 | 565.21 | 0.62 |
| 2107209 | 2112201 | 3113.57 | 0.69 |
| 2147372 | 2150384 | 1658.69 | 0.58 |

# FIG. 8

| Start | Stop | Center | Mean | Max |
|-------|------|--------|------|-----|
| 1476.009 | 1569.319 | 1522.66 | 0.64 | 0.73 |
| 1929.297 | 1977.777 | 1953.53 | 0.52 | 0.54 |
| 2376.122 | 2430.952 | 2403.53 | 0.53 | 0.56 |
| 2790.544 | 2867.346 | 2828.94 | 0.60 | 0.66 |
| 6447.188 | 6573.537 | 6510.36 | 0.56 | 0.62 |
| 8227.142 | 8332.335 | 8279.73 | 0.69 | 0.80 |
| 8940.816 | 9016.530 | 8978.67 | 0.60 | 0.66 |
| 10567.959 | 10671.383 | 10619.67 | 0.69 | 0.80 |
| 11000.000 | 11090.748 | 11045.37 | 0.58 | 0.63 |
| 11456.303 | 11643.877 | 11550.09 | 0.58 | 0.62 |
| 14349.070 | 14404.353 | 14376.71 | 0.55 | 0.58 |
| 14801.405 | 14854.784 | 14828.09 | 0.53 | 0.56 |
| 15345.736 | 15429.591 | 15387.66 | 0.63 | 0.71 |
| 16078.979 | 16154.943 | 16116.96 | 0.60 | 0.66 |
| 22366.780 | 22515.873 | 22441.32 | 0.59 | 0.66 |
| 34563.560 | 34657.664 | 34610.61 | 0.56 | 0.58 |
| 35430.498 | 35522.857 | 35476.67 | 0.65 | 0.75 |
| 35846.825 | 35939.977 | 35893.40 | 0.69 | 0.80 |
| 36301.133 | 36391.587 | 36346.36 | 0.68 | 0.78 |
| 36723.174 | 36836.213 | 36779.69 | 0.70 | 0.82 |
| 37034.331 | 37186.371 | 37110.35 | 0.81 | 1.00 |
| 38097.369 | 38164.331 | 38130.85 | 0.56 | 0.60 |
| 39128.911 | 39229.002 | 39178.95 | 0.64 | 0.71 |
| 41243.900 | 41354.716 | 41299.30 | 0.64 | 0.72 |
| 41816.054 | 41932.630 | 41874.34 | 0.69 | 0.79 |
| 42505.464 | 42699.138 | 42602.30 | 0.69 | 0.82 |
| 46127.755 | 46217.959 | 46172.85 | 0.62 | 0.70 |
| 46570.544 | 46645.124 | 46607.83 | 0.55 | 0.59 |
| 47023.174 | 47088.185 | 47055.68 | 0.57 | 0.61 |
| 47449.614 | 47539.931 | 47494.77 | 0.61 | 0.68 |
| 47782.517 | 47895.714 | 47839.11 | 0.62 | 0.69 |

FIG. 9

M:= master signature
T:= test signature     300

Init shiftvector shift
Init distance vector dist     310

dist[shift[i]] :=
Hdist(A,T+shift[i])     320

N    Done?    330

Y

distance := min(dist)     340

FIG.10

M:= vector(master[center]) ⟋400
T:= vector(test[center])

for each a from M ⟋410

dist[a] = min(abs(b-a)) ⟋420

d1 := max(dist) ⟋430

for each b from T ⟋440

dist[b] = min(abs(a-b)) ⟋450

d2 := max(dist) ⟋460

Hdist := max(d1,d2) ⟋470

# FIG.11

Distance = f(shift)

FIG.12

FIG. 13

FIG. 14

FIG. 15